# EUROPEAN PATENT APPLICATION

(11) **EP 3 251 833 A1**
(43) Date of publication of application: **06.12.2017**
(21) Application number: 16740043.1
(22) Date of filing: 14.01.2016
(51) Int. Cl.: B32B 9/00, B32B 15/04, G02B 5/26

(54) **MULTILAYER LAMINATED CIRCUIT BOARD**

(30) Priority: 20.01.2015 JP 2015008304; 21.07.2015 JP 2015143704
(71) Applicant: Toray Industries, Inc., Tokyo 103-8666 (JP)
(72) Inventor: MAEDA, Yukihiro, Otsu-shi Shiga 520-2141 (JP); KITAGAWA, Masayuki, Otsu-shi Shiga 520-2141 (JP); TAKEDA, Masanobu, Otsu-shi Shiga 520-2141 (JP)
(74) Representative: Kador & Partner
(86) International application number: PCT/JP2016/050921
(87) International publication number: WO 2016/117436

(57) **Abstract**

The present invention provides a far-infrared radiation-reflecting multilayer laminated substrate that has an excellent external appearance with less change in color tone and that has a good weather resistance.

The multilayer laminated substrate of the present invention is a multilayer laminated substrate characterized in that at least a transparent resin substrate [A], a metal oxide layer [C], an electroconductive metal layer [D], a high refractive index metal oxide layer [E], and a protection layer [F] containing at least one of an inorganic oxide and an inorganic nitride are stacked in this order and the following (1) and (2) are satisfied:
(1) a film thickness of the protection layer [F] is 5 nm to 300 nm; and
(2) relative to a sum total of one or more metal elements, one or more semimetal elements, and one or more semiconductor elements contained in the protection layer [F], a content percentage by mass of carbon contained in the protection layer [F] is less than or equal to 50%.

## Description

### Technical Field

The present invention relates to a far-infrared radiation-reflecting multilayer laminated substrate good in weather resistance that has an excellent external appearance with less change in color tone.

### Background Art

As materials that control infrared radiation that pass through windows and the like so as to reduce the energy needed for temperature regulation or low-temperature maintenance, multilayer laminates, such as glass sheets or films (refer to Patent Document 1 and Patent Document 2) in which a substrate that transmits visible light is laminated with a thin metal film layer made of gold, silver, copper, etc. and an infrared radiation-reflecting layer made up of a metal oxide layer of titanium oxide, ITO, zinc oxide, etc. have been known. These multilayer laminates have a property of reflecting near-infrared radiation while having a transmissivity for visible radiation. The multilayer laminates are being utilized for uses for cutting off solar energy coming in through windows of buildings or vehicles so as to improve the air-cooling effect or for improving the low-temperature maintaining effect in freezing/refrigerating showcases.

Furthermore, Patent Document 1 and Patent Document 2 mentioned above describe that a surface protection layer made up of an acryl based resin, such as polymethyl methacrylate, a silicon resin, such as a polymer obtained from ethyl silicate, a polyester resin, a melamine resin, a fluorine resin, etc., is used as a measure for physically protecting the infrared radiation-reflecting layer. Furthermore, besides the foregoing surface protection layers, a surface protection layer made of a polyolefin based resin is also known.

### Prior Art Documents

### Patent Documents

Patent Document 1: Japanese Examined Patent Publication (Kokoku) No. SHO 58-010228
Patent Document 2: Japanese Unexamined Patent Publication (Kokai) No. 2001-310407

### Summary of the Invention

### Problems to be Solved by the Invention

A surface protection layer made of an acryl based resin excellent in scratch resistance is progressively more excellent in the protection performance for the infrared radiation-reflecting layer as the surface protection layer is thicker. Furthermore, the surface protection layer absorbs light in a visible light-to-near-infrared region only to a small degree and is excellent in the transmissivity for light in that region. However, on another hand, the surface protection layer absorbs light in a far-infrared region to a great degree. Properly, light in the far-infrared region needs to be reflected by an infrared radiation-reflecting layer in a multilayer laminate as described in Patent Document 1 or Patent Document 2. However, there is a problem that, when far-infrared radiation is transmitted through the surface protection layer, the substrate, etc., absorption occurs so that the far-infrared radiation reflection performance of the multilayer laminate considerably decreases. Furthermore, the degree of decrease in far-infrared radiation reflection performance is more conspicuous as the surface protection layer, the substrate and the like through which far-infrared radiation passes are thicker. Therefore, in order to enhance the far-infrared radiation reflection performance, it is conceivable to reduce the film thickness of a layer provided on a surface side of the far-infrared radiation-reflecting layer and thereby restrain the absorption amount of far-infrared radiation.

However, if the film thickness of the surface protection layer is a thickness that sufficiently restrains the absorption amount of far-infrared radiation while securing an excellent protective property, slight thickness irregularities of the surface protection layer and changes in observation angle come to be conspicuously observed as changes in color tone, so that the external appearance of the multilayer laminated substrate greatly changes. On another hand, by making the film thickness of the surface protection layer sufficiently thinner than the wavelength of visible radiation, it is possible to make the thickness irregularities of the surface protection layer and changes in observation angle difficult to observe as changes in color tone; however, there exists a problem of occurrence of performance degradation in terms of protection performance, such as a decrease in weather resistance.

Accordingly, an object of the present invention is to provide a far-infrared radiation-reflecting multilayer laminated substrate that has an excellent external appearance with less change in color tone and that has a good weather resistance.

### Means for Solving the Problems

The present invention is intended to solve the aforementioned problem. The multilayer laminated substrate of the present invention is a multilayer laminated substrate characterized in that at least a transparent resin substrate [A], a metal oxide layer [C], an electroconductive metal layer [D], a high refractive index metal oxide layer [E], and a protection layer [F] containing at least one of an inorganic oxide and an inorganic nitride are stacked in this order and the following (1) and (2) are satisfied:
(1) thickness of the protection layer [F] is 5 nm to 300 nm; and
(2) relative to a sum total of one or more metal elements, one or more semimetal elements, and one or more semiconductor elements contained in the protection layer [F], a content percentage by mass of carbon contained in the protection layer [F] is less than or equal to 50%.

According to a preferred mode of the multilayer laminated substrate of the present invention, the protection layer [F] contains a silicon and a carbon and at least a portion of the silicon is silicon oxide and/or silicon nitride, and the following a and b are satisfied:
a. relative to the sum total of the one or more metal elements, the one or more semimetal elements, and the one or more semiconductor elements contained in the protection layer [F], a content percentage by number of atoms of silicon is greater than or equal to 50% by number of atoms and less than or equal to 99% by number of atoms; and
b. relative to the sum total of the one or more metal elements, the one or more semimetal elements, and the one or more semiconductor elements contained in the protection layer [F], the content percentage by number of atoms of carbon is greater than or equal to 1% by number of atoms and less than or equal to 50% by number of atoms.

According to a preferred mode of the multilayer laminated substrate of the present invention, the protection layer [F] further contains an oxygen and a nitrogen, the oxygen forms an oxide with at least one species selected from the group consisting of the one or more metal elements, the one or more semimetal elements, and the one or more semiconductor elements contained in the protection layer [F], and the nitrogen forms a nitride with at least one species selected from the group consisting of the one or more metal elements, the one or more semimetal elements, and the one or more semiconductor elements contained in the protection layer [F], and the following c is satisfied:
c. a relative content percentage of nitrogen {(content percentage by number of atoms of nitrogen) / ((content percentage by number of atoms of oxygen) + (content percentage by number of atoms of nitrogen)) × 100} that is a content percentage by number of atoms of nitrogen relative to a sum of the content percentage by number of atoms of nitrogen and a content percentage by number of atoms of oxygen that are contained in the protection layer [F] is greater than or equal to 1% and less than or equal to 80%.

According to a preferred mode of the multilayer laminated substrate of the present invention, the protection layer [F] is a protection layer in which one or more layers selected from the group consisting of a layer containing a metal oxide, a layer containing a metal nitride, and a layer containing a metal oxide and a metal nitride are stacked.

According to a preferred mode of the multilayer laminated substrate of the present invention, the multilayer laminated substrate has a transparent primer layer [B] between the transparent resin substrate [A] and the metal oxide layer [C].

According to a preferred mode of the multilayer laminated substrate of the present invention, the metal oxide layer [C] satisfies the following (3), (4), and (5):
(3) the metal oxide layer [C] is in direct contact with the transparent primer layer [B];
(4) relative to a sum total of one or more metal elements, one or more semimetal elements, and one or more semiconductor elements contained in the metal oxide layer [C], a content percentage by mass of tin contained in the metal oxide layer [C] is greater than or equal to 50% and less than or equal to 90%; and
(5) relative to the sum total of the one or more metal elements, the one or more semimetal elements, and the one or more semiconductor elements contained in the metal oxide layer [C], a content percentage by mass of zinc contained in the metal oxide layer [C] is greater than or equal to 10% and less than or equal to 50%.

According to a preferred mode of the multilayer laminated substrate of the present invention, the high refractive index metal oxide layer [E] satisfies the following (6), (7), and (8) :
(6) the high refractive index metal oxide layer [E] is in direct contact with the protection layer [F];
(7) relative to a sum total of one or more metal elements, one or more semimetal elements, and one or more semiconductor elements contained in the high refractive index metal oxide layer [E], a content percentage by mass of tin contained in the high refractive index metal oxide layer [E] is greater than or equal to 50% and less than or equal to 90%; and
(8) relative to the sum total of the one or more metal elements, the one or more semimetal elements, and the one or more semiconductor elements contained in the high refractive index metal oxide layer [E], a content percentage by mass of zinc contained in the high refractive index metal oxide layer [E] is greater than or equal to 10% and less than or equal to 50%.

### Advantageous Effects of the Invention

According to the present invention, a far-infrared radiation-reflecting multilayer laminated substrate that has an excellent external appearance with less change in color tone and that has a good weather resistance can be obtained. For example, concretely, by causing a 5 nm to 300 nm protection layer that is less in change in color tone and that does not greatly inhibit the far-infrared radiation reflection performance to have a composition containing silicon, carbon, oxygen, and nitrogen, a multilayer laminated substrate excellent in weather resistance and chemical resistance can be obtained.

### Brief Description of the Drawings

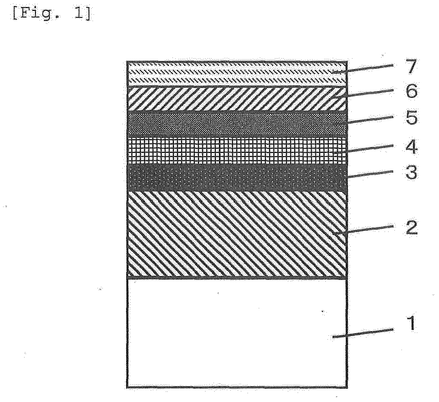

[Fig. 1] Fig. 1 is a schematic sectional view for exemplifying and illustrating a multilayer laminated substrate obtained in Example 1 of the present invention.

### Description of Preferred Embodiments

The multilayer laminated substrate of the present invention is one in which at least a transparent resin substrate [A], a metal oxide layer [C], an electroconductive metal layer [D], a high refractive index metal oxide layer [E], and a protection layer [F] containing at least one of an inorganic oxide and an inorganic nitride are stacked in this order and, furthermore, a film thickness of the protection layer [F] is 5 nm to 300 nm and, relative to a sum total of one or more metal elements, one or more semimetal elements, and one or more semiconductor elements contained in the protection layer [F], a content percentage by mass of carbon contained in the protection layer [F] is less than or equal to 50%.

Next, various layers that constitute the multilayer laminated substrate of the present invention will be described in detail.

### [Transparent Resin Substrate]

It is preferable the transparent resin substrate [A] used in the present invention be a transparent resin film having flexibility, in order to facilitate continuous processing and handling. As a material of the transparent resin film, for example, aromatic polyesters represented by polyethylene terephthalate and polyethylene-2,6-naphthalate, aliphatic polyamides represented by nylon 6 and nylon 66, aromatic polyamides, polyolefins represent by polyethylene and polypropylene, polycarbonates, acryls represented by polymethyl methacrylate and the like, etc. can be mentioned as examples.

Among these, aromatic polyesters are preferably used from the viewpoint of cost, ease of handling, the heat resistance to heat received when a laminate is processed, etc. In particular, polyethylene terephthalate or polyethylene-2,6-naphthalate is preferable and, particularly, polyethylene terephthalate is preferably used.

Furthermore, as the transparent resin film, a biaxially drawn film enhanced in mechanical strength is preferable and, particularly, a biaxial drawing polyethylene terephthalate film is preferable. From the viewpoint of ease of handling and productivity improvement by elongation of processing units, it is preferable that the thickness of the transparent resin film be within the range from being equal to or greater than 5 µm to being equal to or less than 250 µm, and it is more preferable that the lower limit value of the range be greater than or equal to 15 µm, and it is a preferred mode that the upper limit value thereof be less than or equal to 150 µm.

Furthermore, in the transparent resin film, various additives, for example, an antioxidant, a heat resistant stabilizing agent, a weathering stabilizer agent, an ultraviolet absorber, an organic lubricating agent, a pigment, a dye, an organic or inorganic fine particle, a filler, an antielectrostatic agent, a nucleating agent, etc., are added to such degrees as not to deteriorate the properties.

In the present invention, for the sake of bettering the adhesion property of the transparent resin film, provision on a substrate surface an adhesiveness improving layer made of a polyester resin, an acryl based resin, a urethane resin, etc. is a preferred mode. For the sake of further bettering the adhesion property, addition of a melamine crosslinking agent or the like to the adhesiveness improving layer is also a preferred mode. As for the thickness of the adhesiveness improving layer, it is usually preferable that the thickness be within the range of being equal to or greater than 0.01 µm to being equal to or less than 5 µm, and the lower limit value thereof is more preferably greater than or equal to 0.02 µm and even more preferably greater than or equal to 0.05 µm, and the upper limit value thereof is more preferably less than or equal to 2 µm and even more preferably less than or equal to 0.5 µm. If the thickness of the adhesiveness improving layer is excessively thin, poor adhesiveness sometimes results.

### [Transparent Primer Layer]

In the multilayer laminated substrate of the present invention, in order to prevent stress from concentrating between the transparent resin substrate [A] and the metal oxide layer [C], it is preferable to provide a transparent primer layer [B] between the transparent resin substrate [A] and the metal oxide layer [C]. The thickness of the transparent primer layer [B] is preferably within the range of 0.1 µm to 10 µm and can be selected as appropriate according to the configuration of the multilayer laminated substrate, the composition of each layer, and uses of the multilayer laminate.

As for a material of the transparent primer layer [B], a material can be appropriately selected for use from visible light transmissive materials, including organic-based films containing a crosslinking resin as a main component, inorganic-based films containing an inorganic oxide/nitride or the like as a main component, organic-inorganic hybrid based films, such as ones in which an inorganic particle is dispersed in an organic-based film, ones in which an organically modified substance of an inorganic-based film material is used, and mixtures thereof, etc., in order to prevent concentration of stress in interiors of various layers of the multilayer laminated substrate or in inter-layer interfaces, in accordance with a combination with the transparent resin substrate [A], the metal oxide layer [C], the electroconductive metal layer [D], the high refractive index metal oxide layer [E], and the protection layer [F] containing at least one of an inorganic oxide and an inorganic nitride.

For example, the transparent primer layer [B] being an organic-based film containing as a main component a crosslinking resin, such as an acryl based one, a urethane based one, or a melamine based one, is a preferred mode because film properties can be relatively easily adjusted by the kind or amount of a main chain or a side chain and the kind or amount of a functional group contained or a particle contained. As a method for obtaining an organic-based hard coat, a method in which an organic-based hard coat is obtained by drying and hardening a coating liquid obtained by diluting a resin composition containing (meth) acrylate as a main component in a solvent, etc. can be cited.

The organic-based film being an acryl based crosslink resin obtained by crosslinking (meth)acrylate is a preferred mode because, by compounding it with a photopolymerization initiating agent or the like, the hardening of the organic-based film can be controlled by energy radiation, such as ultraviolet radiation, and therefore the physical property control by the hardening of the organic-based film becomes easy.

As examples of the (meth)acrylate, 1,4-butanediol diacrylate, 1,6-hexanediol diacrylate, neopentyl glycol diacrylate, polyethylene glycol diacrylate, hydroxy pivalic acid neopentyl glycol diacrylate, dicyclopentanyl diacrylate, caprolactone denaturation dicyclopentenyl diacrylate, ethylene oxide- modified phosphate diacrylate, allylated cyclohexyl diacrylate, isocyanurate diacrylate, trimethylol propane triacrylate, dipentaerythritol triacrylate, propionic acid-modified dipentaerythritol triacrylate, pentaerythritol triacrylate, propylene oxide- modified trimethylol propane triacrylate, tris(acryloxyethyl) isocyanurate, dipentaerythritol pentaacrylate, propionic acid-modified dipentaerythritol pentaacrylate, dipentaerythritol hexaacrylate, caprolactone-modified dipentaerythritol hexaacrylate, various urethane acrylates and melamine acrylates, ethylene glycol dimethacrylate, triethylene glycol dimethacrylate, 1.4-butanediol dimethacrylate, neopentyl glycol dimethacrylate, 1. 6-hexanediol dimethaclate, 1. 9-nonane diol dimethacrylate, 1.10-decane diol dimethacrylate, glycerin dimethacrylate, dimethylol tricyclodecane dimethacrylate, trimethylol propane trimethacrylate, ethoxylated trimethylol propane trimethacrylate, etc. can be cited.

Generally, the more functional groups the acrylate used has, the higher the surface hardness of the organic-based film is. These (meth)acrylates can be used singly and can also be used in a combination of two or more multifunctional (meth)acrylates or together with a resin having an unsaturated group with a small number of functional groups so as to adjust properties of the organic-based film. The (meth)acrylate may be used in the form of a monomer or may also be used in the form of a prepolymer and can also be used in a mixture of a plurality of kinds of monomers and prepolymers.

In order to reform the organic-based film's shrinkage, surface hardness, optical property, or surface shape, an inorganic or organic particle or a combination thereof can be used and one kind of such particle or two or more kinds thereof can be used. For example, as for the inorganic particle, silicon oxide, aluminum oxide, zirconium oxide, titanium oxide, zinc oxide, germanium oxide, and tin oxide can be used. Furthermore, as for the organic fine particle, a particle interior crosslink type styrene based resin, a styrene-acryl based copolymerization resin, an acryl based resin, a divinyl benzene resin, a silicone based resin, a urethane resin, a melamine resin, a styrene-isoprene based resin, a benzoguanamine resin, a polyamide resin, a polyester resin, etc. can be used.

As for the shape of the particle, there are a spherical shape, a hollow shape, a porous shape, a rod shape, a planar shape, a fibrous shape, an indeterminate shape, etc., which can be selectively used as appropriate in accordance with the property needed. Furthermore, by performing such a surface treatment as to introduce a functional group into the particle surface, a crosslink reaction can be caused between the crosslinking resin and the particle surface to reform the property of the transparent primer layer [B]. As the surface treatment for introducing a functional group, for example, an organic compound having a polymerizing unsaturated group can be bound to the particle. As a polymerizing unsaturated group, for example, an acryloyl group, a methacryloyl group, a vinyl group, a propenyl group, a butadienyl group, a styryl group, an ethynyl group, a cinnamoyl group, a maleate group, and an acrylamide group can be cited.

The size of the particle used can be appropriately selected in accordance with a required property. For example, as the particle diameter is larger, the surface area per volume is smaller, so that the interface effect is smaller and, at the same time, the transparent primer layer [B] is more likely to have protuberances and depressions and the light scattering effect is greater. Furthermore, in order to increase the transparency of the transparent primer layer [B] and increase the smoothness thereof, it is preferable that the average primary particle diameter of the particle used be less than or equal to 100 nm and it is a more preferred mode that the average primary particle diameter be less than or equal to 50 nm. On another hand, in order to provide the transparent primer layer [B] with a light scattering effect or with protuberances and depressions, it is preferable that the average primary particle diameter of the particle used be greater than or equal to 0.1 µm and less than or equal to 10 µm and it is more preferable that the lower limit value thereof be greater than or equal to 0.2 µm and it is more preferable that the upper limit value thereof be less than or equal to 5 µm.

Furthermore, for example, the transparent primer layer [B] being an inorganic-based hard coat whose main component is an inorganic oxide/nitride, such as silica, alumina, zirconia, or DLC, or the like, is a preferred mode because of being good in the affinity for the metal oxide layer [C] and being high in process compatibility, such as being able to be continuously processed in a dry coating process such as sputtering. In the case where the transparent primer layer [B] is an inorganic-based film, it is easy to obtain a dense film, thus achieving an advantage of being able to easily produce high hardness or the like, while it sometimes happens that because of the slow speed of film formation, making the film thick is difficult and the strain that the multilayer laminate receives due to the shrinkage stress occurring during the film formation tends to be large, among other constraints. As examples of a method for obtaining the inorganic-based film, a method in which the transparent primer layer [B] is obtained by a sputtering process in which a target of one of various metals and alloys and their oxides, nitrides, suboxides, subnitrides, oxynitrides, suboxynitrides, etc., is used and, according to need, reacted with a gas, such as oxygen or nitrogen, and the like can be cited.

As the transparent primer layer [B], an organic-inorganic hybrid based film can be used as a layer that has both the advantages of the organic-based film and the inorganic-based film. As examples of a method for obtaining the organic-inorganic hybrid based film, there are a method in which, using as a raw material an organic-inorganic compound such as an alkyl silicate or an alkyl titanate, the transparent primer layer [B] is obtained by a CVD process in which the organic-inorganic compound vaporized and a gas, such as oxygen or nitrogen, are reacted in plasma or the like, a method in which the transparent primer layer [B] is obtained by a wet coating process in which an organic metal compound diluted in a solvent is dried to harden, etc.

In order to obtain physical properties such as scratch resistance and surface hardness, it is preferable that the thickness of the transparent primer layer [B] be made thick. Furthermore, in order to inhibit strain, such as curl, that is caused by stress occurring during the film formation of the transparent primer layer [B], it is preferable that the thickness of the transparent primer layer [B] be made thin. To that end, it is preferable that the thickness of the transparent primer layer [B] be greater than or equal to 0.1 µm and less than or equal to 10 µm, and it is more preferable that the lower limit value thereof be greater than or equal to 0.2 µm and it is even more preferable that the lower limit value be greater than or equal to 0.4 µm, and it is more preferable that the upper limit value thereof be less than or equal to 5 µm and it is even more preferable that the upper limit value be less than or equal to 3 µm.

In the case where the transparent primer layer [B] is an organic-based film whose main component is a crosslinking resin, the flexibility of the transparent primer layer [B] increases and therefore the capability thereof to follow deformation becomes good but the film hardness decreases. Therefore, it is necessary to adjust the thickness of the transparent primer layer [B] to 0.4 µm or greater, and it is more preferable to make the thickness greater than or equal to 0.5 µm and it is an even more preferred mode to make the thickness greater than or equal to 1 µm. On the other hand, it is preferable that the upper limit value thereof be less than or equal to 3 µm.

### [Protection Layer Containing At Least One of Inorganic Oxide and Inorganic Nitride]

The film thickness of the protection layer [F] containing at least one of an inorganic oxide and an inorganic nitride in the multilayer laminated substrate of the present invention is greater than or equal to 5 nm and less than or equal to 300 nm. In order to obtain a stable protecting effect, it is necessary to make the film thickness of the protection layer [F] greater than or equal to 5 nm. Although the cause is not clear, it is speculated that this may be because when the film thickness of the protection layer [F] is excessively thin, the forming of a homogeneous protection film becomes difficult and stress tends to concentrate in portions where protection performance is weak, so that structural disorder is promoted.

On another hand, in order to inhibit changes in the film thickness of the protection layer [F] resulting in changes in color tone and therefore inhibiting deterioration of the external appearance quality level, it is necessary to make the film thickness of the protection layer [F] less than or equal to 300 nm. It is speculated that this may be because when the film thickness of the protection layer [F] is close to the wavelengths of visible radiation, changes in color tone caused depending on thickness irregularities and the observation angle are conspicuous.

Furthermore, because the protection layer [F] absorbs far-infrared radiation, the thinner the protection layer [F], the more inhibited the far-infrared radiation absorption of the electroconductive metal layer [D] and therefore the more excellent the far-infrared radiation reflection performance of the multilayer laminated substrate becomes and also the more excellent the thermal insulation performance becomes.

Here, as the protection layer [F] containing at least one of an inorganic oxide and an inorganic nitride, a protection layer in which one or more layers selected from the group consisting of a layer containing an inorganic oxide, a layer containing an inorganic nitride, and a layer containing an inorganic oxide and an inorganic nitride are stacked is mentioned as an example.

Relative to a sum total of one or more metal elements, one or more semimetal elements, and one or more semiconductor elements contained in the protection layer [F] containing at least one of an inorganic oxide and an inorganic nitride in the multilayer laminated substrate of the present invention, the content percentage by mass of carbon is less than or equal to 50%. By adopting the foregoing composition, the weather resistance of the protective inorganic oxide/nitride improves, so that even if the film thickness of the protection layer [F] is made thin, the excellent weather resistance of the protection layer [F] can be secured. Although the cause for improvement in the weather resistance of the protective inorganic oxide/nitride is not clear, it is speculated that this may be because, in a region of film thickness of the protective inorganic oxide/nitride in the present invention, when the amount of carbon contained is excessively large, stress tends to concentrate between an inorganic compound structure and a carbon compound structure and therefore structures is more likely to be disordered.

The protection layer [F] being an inorganic-based hard coat whose main components are a metal element, a semimetal element, or a semiconductor element, oxygen, nitrogen, etc., such as silica, alumina, or zirconia, produces good affinity for the high refractive index metal oxide layer [E] and produces high process compatibility, for example, the protection layer [F] can be continuously processed in a dry coating process such as sputtering. Because the protection layer [F], being an inorganic-based hard coat, can be easily made as a dense film, and therefore has an advantage of easily achieving high hardness and the like, while it sometimes happens that because of the slow speed of film formation, making the film thick is difficult and the strain that the multilayer laminate receives due to the shrinkage stress occurring during the film formation tends to be large, among other constraints.

As examples of a method for obtaining the inorganic-based hard coat, methods in which a hard coat layer is obtained by a sputtering process in which a target of one of various metals and alloys and their oxides, nitrides, suboxides, subnitrides, oxynitrides, suboxynitrides, etc., is used and, according to need, reacted with hydrocarbon, water, carbonic acid gas, nitrogen, or oxygen mixed with argon, krypton, or xenon, and the like can be cited. For example, it is a preferred mode that, using a silicon target whose electroconductivity has been improved by doping it with boron, sputtering is performed under an oxidation condition to obtain a silica film.

As another method for obtaining the protection layer [F] containing at least one of an inorganic oxide and an inorganic nitride, an organic-inorganic hybrid based hard coat can be used. As examples of a method for obtaining an organic-inorganic hybrid based hard coat, a method in which, using as a raw material an organic-inorganic compound such as an alkyl silicate or an alkyl titanate, a hard coat layer is obtained by a CVD process in which the organic-inorganic compound vaporized and a gas, such as oxygen or nitrogen, are reacted in plasma or the like, a method in which a hard coat layer is obtained by a wet coating process in which an organic metal compound diluted in a solvent is dried to harden, etc. can be cited.

To obtain a protection layer [F] that is even better in optical properties, such as visible light transmittance, film physical properties, such as scratch resistance, it is preferable that the protection layer [F] contain silicon and at least a portion of the silicon be silicon oxide and/or silicon nitride. From that viewpoint, it is preferable that the content percentage by number of atoms of silicon relative to the sum total of one or more metal elements, one or more semimetal elements, and one or more semiconductor elements contained in the protection layer [F] be greater than or equal to 30% by number of atoms, more preferably greater than or equal to 50% by number of atoms, and even more preferably greater than or equal to 70% by number of atoms.

On another hand, from the viewpoint of containment of a component other than silicon making it possible to obtain a reformed protection layer [F] with an improved chemical resistance or the like, it is preferable that the upper limit value of the content percentage by number of atoms of silicon relative to the sum total of one or more metal elements, one or more semimetal elements, and one or more semiconductor elements contained in the protection layer [F] be less than or equal to 99% by number of atoms, more preferably less than or equal to 97% by number of atoms, and even more preferably less than or equal to 95% by number of atoms.

Next, from the viewpoint of making it possible to obtain a protection layer [F] even better in chemical resistance, it is a preferred mode that the protection layer [F] contain carbon. From that viewpoint, it is preferable that the content percentage by number of atoms of carbon relative to the sum total of one or more metal elements, one or more semimetal elements, and one or more semiconductor elements contained in the protection layer [F] be greater than or equal to 1% by number of atoms, more preferably greater than or equal to 3% by number of atoms, and even more preferably greater than or equal to 5% by number of atoms.

On another hand, from the viewpoint of making it possible to secure excellent optical properties and weather resistance of the protection layer [F], it is preferable that the content percentage by number of atoms of carbon relative to the sum total of one or more metal elements, one or more semimetal elements, and one or more semiconductor elements contained in the protection layer [F] be less than or equal to 50% by number of atoms, more preferably less than or equal to 30% by number of atoms, and even more preferably less than or equal to 20% by number of atoms.

Furthermore, the present inventors and the like have found that, when the ratio of the contents of silicon and carbon contained in the protection layer [F] is within a specific range, the chemical resistance of the protection layer [F] is excellent. Although the reason for this is not clear, it is speculated that this is because containing carbon in a silicon oxide and/or a silicon nitride will bring about an increased degree of freedom and an improved denseness in a basic skeleton of the silicon oxide and/or the silicon nitride.

From the foregoing viewpoints, it is preferable that the relative content percentage of carbon {(content percentage by number of atoms of carbon)/((content percentage by number of atoms of silicon) + (content percentage by number of atoms of carbon)) × 100}, which is the content percentage by number of atoms of carbon relative to the sum of the content percentages by number of atoms of silicon and carbon contained in the protection layer [F], be greater than or equal to 1%, more preferably greater than or equal to 3%, and even more preferably greater than or equal to 5%. On another hand, from the viewpoint of making it possible to secure excellent optical properties and weather resistance of the protection layer [F], it is preferable that the upper limit value thereof be less than or equal to 50%, more preferably less than or equal to 30%, and even more preferably less than or equal to 20%.

In the protection layer [F] containing carbon and silicon which exhibits even better chemical resistance mentioned above, from the viewpoint of making it possible to enhance the chemical resistance, it is preferable that the protection layer [F] containing carbon and silicon further contain oxygen and nitrogen, the oxygen have formed an oxide with at least one species of element selected from the group consisting of the one or more metal elements, the one or more semimetal elements, and the one or more semiconductor elements contained in the protection layer [F], and the nitrogen have formed a nitride with at least one species of element selected from the group consisting of the one or more metal elements, the one or more semimetal elements, and the one or more semiconductor elements contained in the protection layer [F].

In this case, it has been found that when the ratio of contents of oxygen and nitrogen contained in the protection layer [F] is within a specific range, the chemical resistance of the protection layer [F] is very excellent and the chemical resistance of a multilayer laminated substrate that has this protection layer [F] is very excellent. Although the reason for this is not clear, when the protection layer [F] contains silicon and carbon and further contains an oxygen and a nitrogen, the oxide and nitride thereby formed exist in an interior of the protection layer [F]. In that case, it is speculated that mingled existence of an oxide structure and a nitride structure occurs and the existence of the plurality of kinds of structures inhibits occurrence of strain and growth of strain within the protection layer [F], so that a protection layer [F] having less structure defect as a whole can be constructed.

Here, the one or more metal elements, the one or more semimetal elements, and the one or more semiconductor elements mentioned in the present invention are those excluding H, He, N, O, F, Ne, S, Cl, Ar, As, Br, Kr, I, Xe, At, and Rn.

From the foregoing viewpoint, it is preferable that the relative content percentage of nitrogen {(content percentage by number of atoms of nitrogen) / ((content percentage by number of atoms of oxygen) + (content percentage by number of atoms of nitrogen)) × 100}, which is the content percentage by number of atoms of nitrogen relative to the sum of the content percentages by number of atoms of oxygen and nitrogen contained in the protection layer [F] be greater than or equal to 1%, more preferably greater than or equal to 3%, and even more preferably greater than or equal to 5%. On another hand, from the viewpoint of making it possible to secure optical properties of the protection layer [F], it is preferable that the upper limit value thereof be less than or equal to 80%, more preferably less than or equal to 60%, and even more preferably less than or equal to 50%.

Furthermore, from the viewpoint of making it possible to adjust the optical properties of the protection layer [F] into a preferable range, such as keeping the visible light reflectance and absorptance thereof low, it is preferable that the content percentage of oxygen and nitrogen that is the content percentage by number of atoms of oxygen and nitrogen relative to the sum total of elements, except hydrogen, that are each contained in amounts greater than or equal to 1% by number of atoms in the protection layer [F] be greater than or equal to 30%, more preferably greater than or equal to 40%, and even more preferably greater than or equal to 50%.

On another hand, from the viewpoint of making it possible to obtain a protection layer [F] that has a firm and stable structure, it is preferable that the upper limit value of the content percentage of oxygen and nitrogen be less than or equal to 70%, more preferably less than or equal to 65%, and even more preferably less than or equal to 60%.

In the protection layer [F], the composition can be adjusted in a combination of necessary properties within such a range that the sum of the content percentages by number of atoms of all the elements that include hydrogen is 100%. At the time of the adjustment, it is difficult to observe all the elements with good accuracy and it is necessary to take into consideration that the range of elements that can be measured is limited depending on observation apparatuses, etc. Furthermore, in order to reform the protection layer [F], it is possible to contain, in addition to oxygen, silicon, carbon, and nitrogen, other components, such as aluminum, zinc, and fluorine, and oxygen, silicon, carbon, and nitrogen can be used while their contents are adjusted according to the contents of the other components.

### [Metal Oxide Layer]

In the multilayer laminated substrate of the present invention, since the metal oxide layer [C] is stacked between the transparent resin substrate [A] or the primer layer [B] and the electroconductive metal layer [D], visible radiation reflection at an interface between the primer layer [B] and the electroconductive metal layer [D] is inhibited so that excellent visible radiation transmission performance can be obtained. A material of the metal oxide layer [C] can be selected as appropriate for use from oxides, such as titanium oxide, zirconium oxide, yttrium oxide, niobium oxide, tantalum oxide, zinc oxide, tin-doped indium oxide (ITO), tin oxide, and bismuth oxide, nitrides, such as silicon nitride, mixtures of these substances, materials in which these materials have been doped with or made to contain a metal, such as aluminum and copper, or carbon, etc.

It becomes possible to adjust interface reflection of the multilayer laminated substrate and the color tones of its reflected light and transmitted light by the refractive index and the thickness of the metal oxide layer [C]. Because the higher the refractive index of the metal oxide layer [C], the greater advantageous effect can be obtained by a small film thickness, it is preferable that the refractive index be greater than or equal to 1.7 and more preferably greater than or equal to 1.9. The metal oxide layer [C] can be formed as a film by a method in which a thin film is obtained by a sputtering process in which a target of one of various metals and alloys and their oxides, nitrides, suboxides, subnitrides, oxynitrides, suboxynitrides, etc. is used and, according to need, reacted with a gas, such as oxygen or nitrogen, a method in which a thin film is obtained by a CVD process in which a vaporized organic metal compound and a gas, such as oxygen or nitrogen, are reacted in plasma or the like, a method in which a thin film is obtained by a wet coating process in which an organic metal compound diluted in a solvent is dried to harden, etc.

In the case where the electroconductive metal layer [D] is formed as a film by a sputtering process, forming the metal oxide layer [C] too as a film by a sputtering process is advantageous in carrying out the film formation continuously from the electroconductive metal layer [D].

On another hand, in order to make the multilayer laminated substrate more excellent in weather resistance, it is important that the metal oxide layer [C] be firmly in close contact with the transparent resin substrate [A] or the primer layer [B]. For example, Published Japanese Translation of PCT International Publication No. JP 2002-539004 proposes an invention in which a metal layer of aluminum, silver, etc. is provided between a polymer substrate and a transparent metal oxide layer in order to improve the close contact property between the polymer substrate and the transparent metal oxide layer. However, this has a problem that the metal layer reflects or absorbs visible radiation, sacrificing its visible light transmission performance.

Therefore, the present inventors and the like have found that the weather resistance of the multilayer laminated substrate will improve without sacrificing the visible light transmissivity of the multilayer laminated substrate when the content percentage by mass of tin contained in the metal oxide layer [C] is greater than or equal to 50% and less than or equal to 90% relative to the sum total of one or more metal elements, one or more semimetal elements, and one or more semiconductor elements contained in the metal oxide layer [C], the content percentage by mass of zinc contained in the metal oxide layer [C] is greater than or equal to 10% and less than or equal to 50% relative to the sum total of the one or more metal element, the one or more semimetal elements, and the one or more semiconductor elements contained in the metal oxide layer [C], and the metal oxide layer [C] is stacked directly on at least one of the primer layer [B] and the electroconductive metal layer [D]. Furthermore, because the weather resistance of the multilayer laminated substrate improves, the film thickness of the foregoing protection layer [F] can be made thinner, so that the multilayer laminated substrate of the present invention can be made excellent in both weather resistance and far-infrared radiation reflection performance.

Although the cause for improvement in the weather resistance of the multilayer laminated substrate achieved by the foregoing configuration is not clear, it is speculated that this may be because when a metal oxide containing zinc which contains as a main component tin with the foregoing composition is used, the strain occurring on the metal oxide layer and the damage given to the transparent resin substrate [A] or the primer layer [B] during the film formation are less. Furthermore, it is speculated that this may be because during the film formation of the electroconductive metal layer [D], the strain occurring in the electroconductive metal layer [D] and the damage given to the metal oxide layer [C] are less.
The thickness of the metal oxide [C] containing zinc which contains as a main component tin with the foregoing composition is adjusted as appropriate together with the configuration of the entire multilayer laminated substrate and the film thicknesses of the constituting layers in accordance with a required optical property; however, in order to inhibit conspicuous color tone unbalance and reflection of visible radiation by the electroconductive metal layer [D], it is preferable that the thickness of the metal oxide [C] be greater than or equal to 5 nm and less than or equal to 100 nm, it is more preferable that the thickness be greater than or equal to 10 nm and less than or equal to 70 nm, and it is even more preferable that the thickness be greater than or equal to 20 nm and less than or equal to 50 nm.

Here, the one or more metal elements, the one or more semimetal elements, and the one or more semiconductor elements are those excluding H, He, N, O, F, Ne, S, Cl, Ar, As, Br, Kr, I, Xe, At, and Rn.

The metal oxide layer [C] used in the present invention can be formed as a film by a method in which a thin film is obtained by a sputtering process in which a target of one of various alloys and their oxides, nitrides, suboxides, subnitrides, oxynitrides, suboxynitrides, etc. is used and, according to need, reacted with a gas such as oxygen or nitrogen, a method in which a thin film is obtained by a CVD process in which a vaporized organic metal compound and a gas, such as oxygen or nitrogen, are reacted in plasma or the like, a method in which a thin film is obtained by a wet coating process in which an organic metal compound diluted in a solvent is dried to harden, etc.

In the case where the next electroconductive metal layer [D] is formed as a film by a sputtering process, forming the metal oxide layer [C] too as a film by a sputtering process is advantageous in carrying out the film formation continuously from the electroconductive metal layer [D].

### [Electroconductive Metal Layer]

In the electroconductive metal layer [D] used in the present invention, a metal that exhibits excellent electroconductivity can be used in order to obtain good far-infrared radiation reflection performance. As such a metal, Al, Au, Ag, etc. can be cited. In particular, it is preferable that Ag, which absorbs less in the visible light range and exhibits very excellent electroconductivity, be contained. It is preferable that the Ag content of the electroconductive metal layer [D], when all the components constituting the electroconductive metal layer [D] are assumed to account for an amount of 100% by mass, be 80% by mass to 100% by mass and more preferably 90% by mass to 100% by mass. In order to restrain reaction of Ag with sulfur, oxygen, etc. and therefore restrain degradation and prevent occurrence of defects due to aggregation or the like, it is preferable that Ag be used as an alloy of Ag with one or more species of metals selected from Au, Pt, Pd, Cu, Bi, Ni, Nd, Mg, Zn, Al, Ti, Y, Eu, Pr, Ce, Sm, Ca, Be, Si, Ge, Cr, Co, Ni, etc.

It is preferable that the film thickness of the electroconductive metal layer [D] be greater than or equal to 5 nm and more preferably greater than or equal to 10 nm. By making the film thickness of the electroconductive metal layer [D] greater than or equal to 5 nm, thickness irregularities of the electroconductive metal layer [D] are inhibited, so that the electroconductive metal layer [D] can deliver stable far-infrared radiation reflection performance. On the other hand, it is preferable that the film thickness of the electroconductive metal layer [D] be less than or equal to 30 nm and more preferably less than or equal to 25 nm. By making the film thickness of the electroconductive metal layer [D] less than or equal to 30 nm, the visible light transmission performance of the multilayer laminated substrate can be further improved.

Furthermore, as a film formation method for the electroconductive metal layer [D], a method in which, using a target of one of various metals or alloys, a thin film is obtained by a sputtering process, a method in which, by a vapor deposition process, a thin film is obtained by depositing one of various metals or alloys vaporized by a method such as resistance heating, an electronic beam, laser, high-frequency induction heating, arc, etc., and the like can be cited. In particular, from the viewpoint of being excellent in controlling the film thickness and the film quality and allowing good film close contact property to be obtained, a method in which a thin film is obtained by a sputtering process is preferably used.

Furthermore, from the viewpoint of protecting the electroconductive metal layer [D] from corrosion and oxidation, it is preferable that a thin metal layer [D2] made of a metal selected from Y, Ti, Zr, Nb, Ta, Cr, Mo, W, Ru, Ir, Pd, Pt, Cu, Au, Al, Ce, Nd, Sm, and Tb or a mixture thereof be further provided so as to coat one side surface or both side surfaces of the electroconductive metal layer [D]. In order to sufficiently protect the electroconductive metal layer [D] from corrosion and oxidation, it is preferable that the film thickness of the foregoing thin metal layer [D2] be greater than or equal to 0.5 nm. Furthermore, in order to good visible light transmission performance, it is preferable that the film thickness of the foregoing thin metal layer [D2] be less than or equal to 10 nm. In order to achieve both good protection performance and good visible light transmission performance, it is a preferred mode that the lower limit of the film thickness of the foregoing thin metal layer [D2] be greater than or equal to 1 nm and the upper limit thereof be less than or equal to 5 nm. The foregoing thin metal layer [D2] is a protection layer provided to protect the electroconductive metal layer [D] from corrosion and has only small influence on properties such as far-infrared radiation reflection performance. Therefore, when the thickness of the electroconductive metal layer [D] is considered in conjunction with properties such as far-infrared radiation reflection performance, the thin metal layer [D2] is excluded from consideration.

### [High Refractive Index Metal Oxide Layer]

That, in the multilayer laminated substrate of the present invention, a high refractive index metal oxide layer [E] whose refractive index is greater than or equal to 1.7 is stacked between the electroconductive metal layer [D] and the protection layer [F] containing at least one of an inorganic oxide and an inorganic nitride inhibits visible radiation reflection at the interface between the electroconductive metal layer [D] and the protection layer [F] containing at least one of an inorganic oxide and an inorganic nitride, so that excellent visible radiation transmission performance can be obtained.

A material of the high refractive index metal oxide layer [E] can be selected as appropriate for use from oxides, such as titanium oxide, zirconium oxide, yttrium oxide, niobium oxide, tantalum oxide, zinc oxide, tin-doped indium oxide (ITO), tin oxide, and bismuth oxide, nitrides, such as silicon nitride, mixtures of these substances, materials in which these materials have been doped with or made to contain a metal, such as aluminum and copper, or carbon, etc.

Based on the refractive index and the thickness of the high refractive index metal oxide layer [E], the interface reflection of the multilayer laminated substrate and the color tone of reflected light therefrom and transmitted light therethrough can be adjusted. The higher the refractive index of the high refractive index metal oxide layer [E], the greater advantageous effect can be obtained by a small film thickness, it is preferable that the refractive index be greater than or equal to 1.7 and more preferably greater than or equal to 1.9. The high refractive index metal oxide layer [E] can be formed as a film by a method in which a thin film is obtained by a sputtering process in which a target of one of various metals and alloys and their oxides, nitrides, suboxides, subnitrides, oxynitrides, suboxynitrides, etc. is used and, according to need, reacted with a gas, such as oxygen or nitrogen, a method in which a thin film is obtained by a CVD process in which a vaporized organic metal compound and a gas, such as oxygen or nitrogen, are reacted in plasma or the like, a method in which a thin film is obtained by a wet coating process in which an organic metal compound diluted in a solvent is dried to harden, etc.

In the case where the electroconductive metal layer [D] is formed as a film by a sputtering process, forming the high refractive index metal oxide layer [E] too as a film by a sputtering process is advantageous in carrying out the film formation continuously from the electroconductive metal layer [D].

In order to control the visible light transmission performance and the infrared radiation reflection performance of the entire multilayer laminated substrate, for example, a substrate in which the electroconductive metal layer [D] and the high refractive index metal oxide layer [E] are continuously stacked as in (/electroconductive metal layer [D]/high refractive index metal oxide layer [E])n can be cited (where n is greater than or equal to 1). Adjusting the numerical value of n of a repeated structure and the refractive indexes and the film thicknesses of the electroconductive metal layer [D] and the high refractive index metal oxide layer [E] is an effective measure for adjustment of the visible light transmittance and the infrared radiation reflection performance of the multilayer laminate.

Furthermore, if the number n of the (/electroconductive metal layer [D]/high refractive index metal oxide layer [E]) that the multilayer laminated substrate of the present invention has is greater than or equal to 1, a multilayer laminated substrate excellent in infrared radiation reflection performance and visible light transmission performance can be obtained. Furthermore, the number "n" of the (/electroconductive metal layer [D] /high refractive index metal oxide layer [E]) being made greater than or equal to 2 can further improve the infrared radiation reflection performance and the visible light transmission performance and therefore is a preferred mode. Furthermore, it is preferable that the upper limit value of the number "n" of the (/electroconductive metal layer [D]/high refractive index metal oxide layer [E]) be less than or equal to 3 from the viewpoint of balance between the complicatedness of the production steps and the infrared radiation reflection performance and visible light transmission performance obtained. From the viewpoint of balance between improvement in infrared radiation reflection performance and visible light transmission performance and the handling characteristic of the laminate film, it is a particularly preferred mode that the number "n" of the (/electroconductive metal layer [D]/high refractive index metal oxide layer [E]) be 1 or 2.

Furthermore, in order to make the weather resistance of the multilayer laminated substrate more excellent, it is important that the high refractive index metal oxide layer [E] be firmly in close contact with the electroconductive metal layer [D] and the protection layer [F]. Here, as a measure for making the high refractive index metal oxide layer [E] firmly and closely contact the electroconductive metal layer [D] and the protection layer [F], provision of a close contact improving layer made of a metal, such as Ti or NiCr, or a metal oxide thereof between the layers of the high refractive index metal oxide layer [E] and the electroconductive metal layer [D] or the protection layer [F] has been well known. However, this has a problem that, due to influences of the visible radiation absorption by the foregoing close contact improving layer, the reflection of visible radiation by the foregoing close contact improving layer interface, etc., the visible light transmissivity of the multilayer laminated substrate is sacrificed. However, the weather resistance improves without sacrificing the visible light transmissivity when the content percentage by mass of tin contained in the high refractive index metal oxide layer [E] is greater than or equal to 50% and less than or equal to 90% relative to the sum total of one or more metal elements, one or more semimetal elements, and one or more semiconductor elements contained in the high refractive index metal oxide layer [E], the content percentage by mass of zinc contained in the high refractive index metal oxide layer [E] is greater than or equal to 10% and less than or equal to 50% relative to the sum total the one or more metal elements, the one or more semimetal elements, and the one or more semiconductor elements contained in the high refractive index metal oxide layer [E], and the high refractive index metal oxide layer [E] is stacked directly on at least one of the electroconductive metal layer [D] and the protection layer [F].

Furthermore, improved weather resistance of the multilayer laminated substrate allows the film thickness of the foregoing protection layer [F] to be even smaller, so that the multilayer laminated substrate of the present invention can be made more excellent in both weather resistance and far-infrared radiation reflection performance. Although the cause for improvement in the weather resistance of the multilayer laminated substrate achieved by the foregoing configuration is not clear, it is speculated that this may be because when a metal oxide in which the content percentage by mass of tin contained in the high refractive index metal oxide layer [E] is greater than or equal to 50% and less than or equal to 90% relative to the sum total of the one or more metal elements, the one or more semimetal elements, and the one or more semiconductor elements contained in the high refractive index metal oxide layer [E] and the content percentage by mass of zinc contained in the high refractive index metal oxide layer [E] is greater than or equal to 10% and less than or equal to 50% relative to the sum total of the one or more metal elements, the one or more semimetal elements, and the one or more semiconductor elements contained in the high refractive index metal oxide layer [E] is used, the strain occurring in the high refractive index metal oxide layer [E] and the damage given to the electroconductive metal layer [D] during the film formation of the high refractive index metal oxide layer [E] become less. Furthermore, it is speculated that this may be because during the film formation of the protection layer [F], the strain occurring in the protection layer [F] and the damage given to the high refractive index metal oxide layer [E] are less.

The thickness of the high refractive index metal oxide [E] containing zinc which contains as a main component tin with the foregoing composition is adjusted as appropriate together with the configuration of the entire multilayer laminated substrate and the film thicknesses of the constituting layers in accordance with a required optical property; however, in order to inhibit conspicuous color tone unbalance and reflection of visible radiation by the electroconductive metal layer [D], it is preferable that the thickness of the high refractive index metal oxide [E] be greater than or equal to 5 nm and less than or equal to 100 nm and more preferably greater than or equal to 10 nm and less than or equal to 80 nm, and it is an even more preferred mode that the thickness be greater than or equal to 20 nm and less than or equal to 60 nm.

### [Surface Reforming Layer]

In the multilayer laminated substrate of the present invention, a surface reforming layer [G] can be provided on the protection layer [F]. For example, use of a fluorocarbon compound or a hydrocarbon compound as the surface reforming layer [G] can provide the surface of the multilayer laminated substrate with an antifouling property. In order to inhibit any change in the film thickness change of the surface reforming layer [G] from resulting in a change in color tone and therefore degrading the external appearance quality level, it is preferable that the film thickness of the surface reforming layer [G] be less than or equal to 300 nm. It is speculated that this may be because when the film thickness of the surface reforming layer [G] is close to the wavelength of visible radiation, color tone change produced depending on thickness irregularities and the observation angle become conspicuous.

Furthermore, because the surface reforming layer [G] absorbs far-infrared radiation, the thinner the surface reforming layer [G], the smaller the inhibitivity of the electroconductive metal layer [D] on the far-infrared radiation reflection performance, which is of advantage.

The far-infrared radiation reflection performance, the visible light transmittance, and the color tones of transmitted light and reflected light can be adjusted by controlling the thickness of the metal oxide layer [C], the thickness of the electroconductive metal layer [D], the thickness of the high refractive index metal oxide layer [E], the thickness of the protection layer [F], and the thickness of the surface reforming layer [G]. For example, with regard to the metal oxide layer [C] and the high refractive index metal oxide layer [E] whose refractive indexes are 1.9 to 2.1 and the protection layer [F] whose refractive index is 1.4 to 1.6, making the thickness of the metal oxide layer [C] 20 nm to 40 nm and the high refractive index metal oxide layer [E] 25 nm to 45 nm allows high visible light transmittance to be obtained and allows color tone changes in transmitted light and reflected light to be restrained even if the thickness of the protection layer [F] changes in the range of 5 nm to 50 nm.

Next, the multilayer laminated substrate of the present invention will be described. Fig. 1 is a schematic sectional view illustrating one mode of the multilayer laminate that was obtained in Example 1 of the present invention. The one mode of the multilayer laminate of the present invention is a mode in which, in Fig. 1, one side surface of the transparent resin substrate [A] 1 is provided with a transparent primer layer [B] 2, a metal oxide layer [C] 3, a electroconductive metal layer [D] 4, a high refractive index metal oxide layer [E] 5, a protection layer [F] 6, and a surface reforming layer [G] 7 stacked in this order.

### [Far-infrared Radiation Reflectance of Multilayer Laminate]

As for the multilayer shooting laminated substrate of the present invention, far-infrared radiation reflectances suitable for uses can be designed by adjusting properties, such as the components, the film qualities, the film thicknesses, and the resistance values regarding the transparent resin substrate [A], transparent primer layer [B], metal oxide layer [C], the electroconductive metal layer [D], the high refractive index metal oxide layer [E], the protection layer [F], and other constituting layers. It is preferable that the far-infrared radiation reflectance of the far-infrared reflect laminate be greater than or equal to 60%, more preferably greater than or equal to 70%, and even more preferably greater than or equal to 80%.

### [Visible Light Transmittance of Multilayer Laminate]

As for the multilayer shooting laminated substrate of the present invention, visible light transmittance suitable for uses can be designed by adjusting the components, the film qualities, and the film thicknesses of the transparent resin substrate [A], the transparent primer layer [B], the metal oxide layer [C], the electroconductive metal layer [D], the high refractive index metal oxide layer [E], the protection layer [F], and other constituting layers. It is preferable that the visible light transmittance of the multilayer laminate be greater than or equal to 40%, more preferably greater than or equal to 50%, and even more preferably greater than or equal to 60%.

### [Uses]

The multilayer laminated substrate of the present invention is a far-infrared radiation-reflecting multilayer laminated substrate that has an excellent external appearance with less color tone change and that has good weather resistance. Therefore, by exploiting these excellent properties, the multilayer laminated substrate of the invention can be employed for uses such as (I) improvement in the cooling and heating effect by blockage of thermal energy that flow in or out through windows of buildings, vehicles, etc., (II) improvement in the thermal environment retention property of greenhouses and cases for plant growing or viewing, (III) improvement in the low-temperature maintaining effect of freezing/refrigerating showcases, (IV) reduction of thermal radiation that flows in or out through monitoring windows during high or low-temperature operations, etc.

Through the use of the multilayer laminated substrate of the present invention on surfaces of interior finishing materials of walls, ceilings, etc., home furnishings, home electric appliance products, etc., the multilayer laminated substrate can be employed to reduce the thermal energy that goes out from inside spaces by radiation of far-infrared radiation.

Furthermore, the multilayer laminated substrate of the present invention, because of having electromagnetic wave blocking capability, also has an advantageous effect as an electromagnetic wave shield material. Furthermore, the multilayer laminated substrate in which a resin film substrate is used, in uses where the multilayer laminated substrate is stuck to glass plates or the like through the use of adhesives or the like, also has effects of preventing the scattering of broken pieces when a glass plate or the like is broken and of protecting glass plates or the like so as to reduce breakage. In order to prevent the resin film substrate from deteriorating due to ultraviolet radiation, it is preferable that an ultraviolet absorber be given to the resin film substrate surface or an adhere layer of a tackiness agent or the like.

### Examples

### [Example 1]

As a transparent resin substrate [A] having a transparent primer layer [B], a hard coat film (Tuftop THS, made by Toray Advanced Film Co., Ltd.) was used.

On the transparent primer layer [B] of the foregoing hard coat film, sputter processing was performed under a film formation gas condition in which the pressure ratio of argon:oxygen was 90%/10% through the use of a metal oxide target in which the content percentage by mass of tin was 70% and the content percentage by mass of zinc was 30% relative to the sum total of one or more metal elements, one or more semimetal elements, and one or more semiconductor elements, to form a metal oxide layer [C] of 45 nm in thickness. Subsequently, using a metal oxide target in which the content percentage by mass of silver was 97% and the content percentage by mass of gold was 3% relative to the sum total of the one or more metal elements, the one or more semimetal elements, and the one or more semiconductor elements, sputter processing was performed under a film formation gas condition of argon being in an amount of 100%, to form a electroconductive metal layer [D] of 15 nm in thickness. Subsequently, using a metal oxide target in which the content percentage by mass of tin was 70% and the content percentage by mass of zinc was 30% relative to the sum total of the one or more metal elements, the one or more semimetal elements, and the one or more semiconductor elements, sputter processing was performed to an amount equivalent to 5 nm in film thickness under a film formation gas condition in which the pressure ratio of argon:oxygen was 98%/2%, and then sputter processing was performed to an amount equivalent to 55 nm in film thickness under a film formation gas condition in which the pressure ratio of argon:oxygen was 90%/10%, to form a high refractive index metal oxide layer [E] of 60 nm in thickness. Further subsequently, using an Si target, sputter processing was performed under a film formation gas condition in which the pressure ratio of argon:oxygen was 80%/20%, to form a protection layer [F] of 20 nm in thickness that contained at least one of an inorganic oxide and an inorganic nitride. Thus, a multilayer laminated substrate was obtained. As for this protection layer [F], the content percentage by mass of carbon was 5% and the content percentage by mass of silicon was 95% relative to the sum total of the one or more metal elements, the one or more semimetal elements, and the one or more semiconductor elements.

### [Example 2]

As a transparent resin substrate [A] having a transparent primer layer [B], a hard coat film (Tuftop THS, made by Toray Advanced Film Co., Ltd.) was used.

On the transparent primer layer [B] of the foregoing hard coat film, sputter processing was performed under a film formation gas condition in which the pressure ratio of argon:oxygen was 90%/10% through the use of a metal oxide target in which the content percentage by mass of tin was 70% and the content percentage by mass of zinc was 30% relative to the sum total of one or more metal elements, one or more semimetal elements, and the one or more semiconductor elements, to form metal oxide layer [C] of 30 nm in thickness. Subsequently, using a metal oxide target in which the content percentage by mass of silver was 97% and the content percentage by mass of gold was 3% relative to the sum total of the one or more metal elements, the one or more semimetal elements, and the one or more semiconductor elements, sputter processing was performed under a film formation gas condition with argon being in an amount of 100%, to form an electroconductive metal layer [D] of 15 nm in thickness. Subsequently, using a metal oxide target in which the content percentage by mass of tin was 70% and the content percentage by mass of zinc was 30% relative to the sum total of the one or more metal elements, the one or more semimetal elements, and the one or more semiconductor elements, sputter processing was performed to an amount equivalent to 5 nm in film thickness under a film formation gas condition in which the pressure ratio of argon:oxygen was 98%/2%, and then sputter processing was performed to an amount equivalent to 30 nm in film thickness under a film formation gas condition in which the pressure ratio of argon:oxygen was 90%/10%, to form a high refractive index metal oxide layer [E] of 35 nm in thickness. Further subsequently, using an Si target, sputter processing was performed under a film formation gas condition in which the pressure ratio of argon:oxygen was 80%/20%, to form a protection layer [F] of 20 nm in thickness that contained at least one of an inorganic oxide and an inorganic nitride. Thus, a multilayer laminated substrate was obtained. As for this protection layer [F], the content percentage by mass of carbon was 5% and the content percentage by mass of silicon was 95% relative to the sum total of the one or more metal elements, the one or more semimetal elements, and the one or more semiconductor elements.

### [Example 3]

As a transparent resin substrate [A] having a transparent primer layer [B], a hard coat film (Tuftop THS, made by Toray Advanced Film Co., Ltd.) was used.

On the transparent primer layer [B] of the foregoing hard coat film, sputter processing was performed under a film formation gas condition in which the pressure ratio of argon:oxygen was 90%/10%, through the use of a metal oxide target in which the content percentage by mass of tin was 70% and the content percentage by mass of zinc was 30% relative to the sum total of one or more metal elements, one or more semimetal elements, and the one or more semiconductor elements, to form a metal oxide layer [C] of 30 nm in thickness. Subsequently, using a metal oxide target in which the content percentage by mass of silver was 97% and the content percentage by mass of gold was 3% relative to the sum total of the one or more metal elements, the one or more semimetal elements, and the one or more semiconductor elements, sputter processing was performed under a film formation gas condition with argon being in an amount of 100%, to form an electroconductive metal layer [D] of 15 nm in thickness. Subsequently, using a metal oxide target in which the content percentage by mass of tin was 70% and the content percentage by mass of zinc was 30% relative to the sum total of the one or more metal elements, the one or more semimetal elements, and the one or more semiconductor elements, sputter processing was performed to an amount equivalent to 5 nm in film thickness under a film formation gas condition in which the pressure ratio of argon:oxygen was 98%/2%, and then sputter processing was performed to an amount equivalent to 30 nm in film thickness under a film formation gas condition in which the pressure ratio of argon:oxygen was 90%/10%, to form an high refractive index metal oxide layer [E] of 35 nm in thickness. The refractive index of the high refractive index metal oxide layer [E] was 2.
Further subsequently, using an Si target, sputter processing was performed under a film formation gas condition in which the pressure ratio of argon/oxygen/carbon dioxide/nitrogen was 50%/40%/0%/10%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 3 are shown in Tables 2 and 4.

### [Example 4]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed under a film formation gas condition in which the pressure ratio of argon/oxygen/carbon dioxide/nitrogen was 50%/30%/20%/0%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 4 are shown in Tables 2 and 4.

### [Example 5]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed under a film formation gas condition in which the pressure ratio of argon/oxygen/carbon dioxide/nitrogen was 50%/20%/0%/30%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 5 are shown in Tables 3 and 4.

### [Example 6]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed under a film formation gas condition in which the pressure ratio of argon/oxygen/carbon dioxide/nitrogen was 50%/0%/0%/50%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 6 are shown in Tables 3 and 4.

### [Example 7]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed in an film formation gas condition in which the pressure ratio of argon/oxygen/carbon dioxide/nitrogen was 60%/0%/40%/0%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 7 are shown in Tables 5 and 7.

### [Example 8]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed under a film formation gas condition in which the pressure ratio of argon/oxygen/carbon dioxide/nitrogen was 45%/5%/30%/20%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 8 are shown in Tables 5 and 7.

### [Example 9]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed under a film formation gas condition in which the pressure ratio of argon/oxygen/carbon dioxide/nitrogen was 80%/5%/5%/10%, to form a protection layer [F] of 25 nm in thickness that contained at least one of an inorganic oxide and an inorganic nitride. Thus, a multilayer laminated substrate was obtained. Evaluation results and the like of the multilayer laminated substrate of Example 9 are shown in Tables 6 and 7.

### [Example 10]

In substantially the same manner as in Example 3, a transparent resin substrate [A], a transparent primer layer [B], a metal oxide layer [C], an electroconductive metal layer [D], and a high refractive index metal oxide layer [E] were formed.

Further subsequently, using an Si target, sputter processing was performed under a film formation gas condition in which the pressure ratio of argon/oxygen/carbon dioxide/nitrogen was 70%/0%/10%/20%, to form a protection layer [F] of 25 nm in thickness that contained at last one of an inorganic oxide and an inorganic nitride. Thus, a multilayer laminated substrate was obtained. Evaluation results and the like of the multilayer laminated substrate of Example 10 are shown in Tables 6 and 7.

### [Comparative Example 1]

In substantially the same manner as in Example 1, a transparent resin substrate [A], a transparent primer layer [B], a metal oxide layer [C], an electroconductive metal layer [D], and a high refractive index metal oxide layer [E] were formed. Next, on the high refractive index metal oxide layer [E], a coating liquid in which a phosphoric acid group-containing methacrylic acid derivative [LIGHTESTER P-2M (made by Kyoeisha Chemical Co., Ltd.)] was mixed in an acryl based resin ["OPSTAR" Z7535 (made by JSR Corporation) so as to be 2% by mass in the solid content was applied, dried, and then irradiated with UV, to form a hard coat layer of about 1.0 µm in thickness. Thus, a multilayer laminated substrate was obtained. As for the protection layer [F] containing at least one of an inorganic oxide and an inorganic nitride, the content percentage by mass of carbon was 60% and the content percentage by mass of silicon was 40% relative to the sum total of the one or more metal elements, the one or more semimetal elements, and the one or more semiconductor elements.

### [Comparative Example 2]

In substantially the same manner as in Example 1, a transparent resin substrate [A], a transparent primer layer [B], a metal oxide layer [C], an electroconductive metal layer [D], and a high refractive index metal oxide layer [E] were formed. Next, on the high refractive index metal oxide layer [E], a coating liquid obtained by mixing a phosphoric acid group-containing methacrylic acid derivative [LIGHTESTER P-2M (made by Kyoeisha Chemical Co., Ltd.)] in an acryl based resin ["OPSTAR" Z7535 (made by JSR Corporation)] so as to be 2% by mass in the solid content was applied, dried, and then irradiated with UV, to form a hard coat layer of about 0.1 µm in thickness. Thus, a multilayer laminated substrate was obtained. As for the protection layer [F] containing at least one of an inorganic oxide and an inorganic nitride, the content percentage by mass of carbon was 60% and the content percentage by mass of silicon was 40% relative to the sum total of the one or more metal elements, the one or more semimetal elements, and the one or more semiconductor elements.

Measurement results of the thicknesses, the content percentages by mass, and properties of Examples 1 and 2 and Comparative Examples 1 and 2 are shown in Table 1.

Examples 1 and 2 were excellent in the two properties in color tone change and weather resistance and exhibited high far-infrared radiation reflectances. Furthermore, Example 2 exhibited a more excellent visible light transmittance than Example 1.

On another hand, Comparative Example 1, in which the film thickness of the protection layer [F] containing at least one of an inorganic oxide and an inorganic nitride exceeded 300 nm and the carbon content percentage by mass was greater than or equal to 50%, was excellent in weather resistance but inferior in the property in color tone change. Furthermore, Comparative Example 1 also exhibited a relatively low in far-infrared radiation reflectance. And Comparative Example 2, in which the film thickness of the protection layer [F] containing at least one of an inorganic oxide and an inorganic nitride was 0.1 µm (100 nm) and the carbon content percentage by mass was greater than or equal to 50%, was excellent in the property in color tone change but inferior in weather resistance.

Next, evaluation methods mentioned in conjunction with the examples or in the main text of the description will be described below.

### <Examples of Measurement Methods>

"Thicknesses of the metal oxide layer [C], the electroconductive metal layer [D], the high refractive index metal oxide layer [E], and the protection layer [F] containing at least one of an inorganic oxide and an inorganic nitride"

The thicknesses were measured in STEM (scanning transmission electron microscopy) images observed by using a field emission type electron microscope (JEM2100F made by JEOL Ltd.).
- Sample preparation: FIB microsampling method (FB-2100-µ-Sampling System made by Hitachi)
- STEM image observation condition: acceleration voltage of 200 kV and beam spot size of about 1 nm in diameter
- Number n of measurements: 1

"Content percentages by mass in the metal oxide layer [C], the electroconductive metal layer [D], the high refractive index metal oxide layer [E], and the protection layer [F] containing at least one of an inorganic oxide and an inorganic nitride"

Percentages by mass were calculated from EDX spectra obtained by measurement using EDX (detector: JED-2300T made by JEOL Ltd., software: Analysis Station made by JEOL Ltd.) loaded in the field emission type electron microscope (JEM2100F made by JEOL Ltd.). Elements whose percentages by mass were less than 1% were excluded in the calculation of percentages by mass.
- Sample preparation: FIB microsampling method (FB-2100-µ-Sampling System made by Hitachi)
- STEM image observation condition: acceleration voltage of 200 kV and beam spot size of about 1 nm in diameter
- Observation elements: C to U
- Number n of measurements: 1

### "Content percentages by number of atoms in the protection layer [F]"

Percentages by number of atoms of atoms constituting the protection layer [F] were calculated from EDX spectra obtained by measurement using EDX (detector: JED-2300T made by JEOL Ltd., software: Analysis Station made by JEOL Ltd.) loaded in the field emission type electron microscope (JEM2100F made by JEOL Ltd.) . Next, the content percentage by number of atoms of each specific atom contained in the protection layer [F] was calculated by dividing the percentage by number of atoms of that atom by the sum total of the percentages by number of atoms of all the atoms contained in the protection layer [F] and multiplying the thus-obtained value by 100. Elements whose percentages by number of atoms were less than 1% were excluded in the foregoing calculation of content percentages by number of atoms. Furthermore, with regard to the percentage by number of atoms of carbon, because a measured value suspected of resulting from contamination of the sample or an analysis apparatus is sometimes indicated, a measured value obtained from a step without carbon being taken into the protection layer [F] in the production process was used as a blank and differences from that blank were taken as the content percentages by number of atoms.
- Sample preparation: FIB microsampling method (FB-2100-µ-Sampling System made by Hitachi)
- STEM image observation condition: acceleration voltage of 200 kV and beam spot size of about 1 nm in diameter
- Observation elements: C to U
- Number n of measurements: 1

### "Thickness of the transparent primer layer [B]"

The thickness of the transparent primer layer [B] was measured by observing a sectional surface through the use of a scanning type electron microscope (ABT-32 made by TOPCON company).
- Measurement content: 5 specimens were measured and an average value among 3 specimens except the specimen exhibiting the maximum value and the specimen exhibiting the minimum value was determined.

### "Far-infrared radiation reflectance"

The measurement of far-infrared radiation reflectance was carried out according to JIS R 3106 (1998). A reflectance determined relative to the thermal radiation at 283K from a spectral reflectance at wavelengths of 5 to 25 µm was taken as a far-infrared radiation reflectance (%).
- Measurement apparatus: IR Prestige-21 made by Shimadzu Corporation
- Regular reflection measurement unit: SRM-8000A
- Wavenumber range: 400 to 2000 cm-1
- Measurement mode: percent transmittance
- Appodization coefficient: Happ-Genzel
- Cumulative number of times: 40
- Resolution: 4.0
- Measurement content: 5 specimens were measured and an average value among 3 specimens except the specimen exhibiting the maximum value and the specimen exhibiting the minimum value was determined.

### "Visible light transmittance"

The measurement of visible light transmittance was carried out according to JIS R 3106 (1998). What was determined from spectral transmittances at wavelengths of 380 to 780 nm was taken as a visible light transmittance (%).
- Measurement apparatus: UV-3150 made by Shimadzu Corporation
- Wavelength range: 380 to 780 nm
- Slit width: (20)
- Scan speed: high speed
- Sampling: 1 nm
- Grating: 720 nm
- Measurement content: 5 specimens were measured and an average value among 3 specimens except the specimen exhibiting the maximum value and the specimen exhibiting the minimum value was determined.

### "Refractive index"

By the following method, refractive indexes at a wavelength of 589 nm were determined.

### 1. Measurement Method

Using the following apparatus and measurement conditions, changes in the state of polarization of reflected light from measurement samples were measured and optical constants (refractive index and extinction coefficient) were determined by calculation. As for calculation, a spectrum of Δ (phase difference) and ψ (amplitude reflectance) measured from samples was compared with (Δ, ψ) calculated from a calculation model, and a dielectric function was fitted by changing it so that calculated values (Δ, ψ) become close to measured values (Δ, ψ). The results of fitting shown here are results with measured values and theoretical values best fitted (the average square error converged to a minimum).

### 2. Apparatuses

- High-speed spectroellipsometer
- M-2000 (made by J. A. Woollam company)
- Rotating compensator type (RCE: rotating compensator ellipsometer)
- 300mm R-Theta stage

### 3. Measurement Condition

- Incident angle: 65 degrees, 70 degrees, 75 degrees
- Measurement wavelength: 195 nm to 1680 nm
- Analysis software: WVASE32
- Beam diameter: about 1 × 2 mm
- Number n of measurements: 1

### "Color tone change"

### 1. Preparation of Evaluation Test Pieces

(1) A multilayer laminated substrate was cut into 50-mm by 50-mm squares.
(2) A sticky layer was formed on a transparent resin substrate [A] side of a film cut in paragraph (1) given above.
(3) The film was stuck to a 3-mm thick float glass via the sticky layer formed in paragraph (2).

### 2. Assessment

The evaluation test pieces were placed on black paper and reflected light of a fluorescent lamp, reflected by the test pieces, was visually observed at angles of 10° to 170°.

### • Criteria

"A": Change in color tone is not observable
"B": Conspicuous change in color tone is observable

### "Weather resistance"

### 1. Preparation of Evaluation Test Pieces

(1) A multilayer laminated substrate was cut into 50-mm by 50-mm squares.
(2) A sticky layer was formed on a transparent resin substrate [A] side of a film cut in paragraph (1) given above.
(3) Next, the film was stuck to a 3-mm-thick float glass via the sticky layer formed in paragraph (2).

### 2. Exposure Test of Evaluation test pieces

Using a Metal Weather (DAIPLA WINTES CO., LTD.), an evaluation test piece was irradiated with ultraviolet radiation from the glass surface side.

### • Exposure test condition

Black panel temperature: 63°C
Humidity: 50%
Strength: 800 W/m²
Water sprinkling: 3 minutes in 2 hours
Exposure time: 150 hours

### 3. Assessment of Evaluation Test Pieces after Exposure Test

A transparent pressure-sensitive adhesion tape (made by Nitto Denko Corporation, model number 31B) was pressure-bonded to a prepared multilayer laminated substrate and was pulled and unstuck in a direction of about 60 degrees.

### (1) Criteria

"A": No peeling.
"B": Peeling occurred.

### "Chemical resistance"

### 1. Preparation of Evaluation Test Pieces

(1) A multilayer laminated substrate was cut into 50-mm by 50-mm squares.
(2) A sticky layer was formed on a transparent resin substrate [A] side of a sample cut in paragraph (1) given above.
(3) Next, the sample was stuck to a 3-mm-thick float glass via the sticky layer formed in paragraph (2) to obtain an evaluation test piece.

### 2. Chemical Resistance Test of Evaluation Test Pieces

(1) An ammonium sulfide aqueous solution (20%) was dripped onto a surface of a prepared evaluation test piece and dried at room temperature for 24 hours.
(2) Ammonium sulfide crystals precipitated on the evaluation test piece were washed off with water.

### 3. Assessment of Evaluation Test Pieces

Sites on each evaluation test piece where the ammonium sulfide aqueous solution was dripped were observed for the presence or absence of change in the color of the evaluation test piece due to corrosion and the presence or absence of surface layer peeling, using a laser microscope.
- Measurement appliance: VK-X110 (made by Keyence)
- Objective lens: standard lens, 10 times
- Optical zoom: 1.0 time

### (1) Criteria

"A": No point of changed color present, no surface layer peeling present.
"B": A point of change color present, no surface layer peeling present.
"C": A surface layer peeling present.
[Table 1]

**Table 1**

| | | Example 1 | Example 2 | Comparative Example 1 | Comparative Example 2 |
|---|---|---|---|---|---|
| Thickness | Protective inorganic oxide and/or inorganic nitride layer [F] | 20 (nm) | 20 (nm) | 1 (µm) | 0.1 (µm) |
| | High refractive index metal oxide layer [E] | 60 (nm) | 35 (nm) | 60 (nm) | 60 (nm) |
| | Electroconductive metal layer [D] | 16 (nm) | 15 (nm) | 16 (nm) | 16 (nm) |
| | Metal oxide layer [C] | 45 (nm) | 30 (nm) | 45 (nm) | 45 (nm) |
| | Transparent primer layer [B] | 2.5 (µm) | 2.5 (µm) | 2.5 (µm) | 2.5 (µm) |
| Content percentage by mass | Protection layer [F] | 95% Si-5% C | 95% Si-5% C | 60% C-40% Si | 60% C-40% Si |
| | High refractive index metal oxide layer [E] | 70% Sn-30% Zn | 70% Sn-30% Zn | 70% Sn-30% Zn | 70% Sn-30% Zn |
| | Electroconductive metal layer [D] | 97% Ag-3% Au | 97% Ag-3% Au | 97% Ag-3% Au | 97% Ag-3% Au |
| | Metal oxide layer [C] | 70% Sn-30% Zn | 70% Sn-30% Zn | 70% Sn-30% Zn | 70% Sn-30% Zn |
| | Transparent primer layer [B] | 90% C-10% Si | 90% C-10% Si | 90% C-10% Si | 90% C-10% Si |
| Properties | Color tone change | ○ | ○ | × | ○ |
| | Weather resistance | ○ | ○ | ○ | × |
| | Far-infrared radiation reflectance | 93% | 93% | 87% | 93% |
| | Visible radiation transmittance | 65% | 75% | 67% | 70% |

[Table 2]

**Table 2**

| | | | Example 3 | Example 4 | Example 5 | Example 6 |
|---|---|---|---|---|---|---|
| Thickness | Protective inorganic oxide and/or inorganic nitride layer [F] | | 25 (nm) | 25 (nm) | 25 (nm) | 25 (nm) |
| | High refractive index metal oxide layer [E] | | 35 (nm) | 35 (nm) | 35 (nm) | 35 (nm) |
| | Electroconductive metal layer [D] | | 15 (nm) | 15 (nm) | 15 (nm) | 15 (nm) |
| | Metal oxide layer [C] | | 30 (nm) | 30 (nm) | 30 (nm) | 30 (nm) |
| | Transparent primer layer [B] | | 2.5 (µm) | 2.5 (µm) | 2.5 (µm) | 2.5 (µm) |
| Content percentage by mass | Protection layer [F] | | 86% Si-14% C | 87% Si-13% C | 88% Si-12% C | 87% Si-13% C |
| | High refractive index metal oxide layer [E] | | 70% Sn-30% Zn | 70% Sn-30% Zn | 70% Sn-30% Zn | 70% Sn-30% Zn |
| | Electroconductive metal layer [D] | | 97% Ag-3% Au | 97% Ag-3% Au | 97% Ag-3% Au | 97% Ag-3% Au |
| | Metal oxide layer [C] | | 70% Sn-30% Zn | 70% Sn-30% Zn | 70% Sn-30% Zn | 70% Sn-30% Zn |
| | Transparent primer layer [B] | | 90% C-10% Si | 90% C-10% Si | 90% C-10% Si | 90% C-10% Si |
| Content percentage by number of atoms | Protective inorganic oxide and/or inorganic nitride layer [F] | Content percentage by number of atoms of silicon relative to the sum total of one or metal elements, one or more semimetal elements, and one or more semiconductor elements | 100% by number of atoms | 100% by number of atoms | 100% by number of atoms | 100% by number of atoms |
| | | Content percentage by number of atoms of carbon relative to the sum total of one or metal elements, one or more semimetal elements, and one or more semiconductor elements | 0% by number of atoms | 0% by number of atoms | 0% by number of atoms | 0% by number of atoms |
| | | Relative content percentage of carbon | 0% | 0% | 0% | 0% |
| | | Relative content percentage of nitrogen | 0% | 0% | 4% | 67% |
| | | Content percentage of oxygen and nitrogen | 57% | 61% | 57% | 54% |
| Properties | Color tone change | | ○ | ○ | ○ | ○ |
| | Weather resistance | | ○ | ○ | ○ | ○ |
| | Chemical resistance | | C | C | C | C |
| | Far-infrared radiation reflectance | | 93% | 93% | 93% | 93% |
| | Visible radiation transmittance | | 75% | 76% | 73% | 70% |

[Table 3]

**Table 3**

| | | | Example 7 | Example 8 | Example 9 | Example 10 |
|---|---|---|---|---|---|---|
| Thickness | Protective inorganic oxide and/or inorganic nitride layer [F] | | 25 (nm) | 25 (nm) | 25 (nm) | 25 (nm) |
| | High refractive index metal oxide layer [E] | | 35 (nm) | 35 (nm) | 35 (nm) | 35 (nm) |
| | Electroconductive metal layer [D] | | 15 (nm) | 15 (nm) | 15 (nm) | 15 (nm) |
| | Metal oxide layer [C] | | 30 (nm) | 30 (nm) | 30 (nm) | 30 (nm) |
| | Transparent primer layer [B] | | 2.5 (µm) | 2.5 (µm) | 2.5 (µm) | 2.5 (µm) |
| Content percentage by mass | Protection layer [F] | | 70% Si-30% C | 81% Si-19% C | 82% Si-18% C | 80% Si-20% C |
| | High refractive index metal oxide layer [E] | | 70% Sn-30% Zn | 70% Sn-30% Zn | 70% Sn-30% Zn | 70% Sn-30% Zn |
| | Electroconductive metal layer [D] | | 97% Ag-3% Au | 97% Ag-3% Au | 97% Ag-3% Au | 97% Ag-3% Au |
| | Metal oxide layer [C] | | 70% Sn-30% Zn | 70% Sn-30% Zn | 70% Sn-30% Zn | 70% Sn-30% Zn |
| | Transparent primer layer [B] | | 90% C-10% Si | 90% C-10% Si | 90% C-10% Si | 90% C-10% Si |
| Content percentage by number of atoms | Protective inorganic oxide and/or inorganic nitride layer [F] | Content percentage by number of atoms of silicon relative to the sum total of one or metal elements, one or more semimetal elements, and one or more semiconductor elements | 77% by number of atoms | 92% by number of atoms | 88% by number of atoms | 85% by number of atoms |
| | | Content percentage by number of atoms of carbon relative to the sum total of one or metal elements, one or more semimetal elements, and one or more semiconductor elements | 23% by number of atoms | 8% by number of atoms | 12% by number of atoms | 15% by number of atoms |
| | | Relative content percentage of carbon | 23% | 8% | 12% | 15% |
| | | Relative content percentage of nitrogen | 0% | 8% | 51% | 19% |
| | | Content percentage of oxygen and nitrogen | 37% | 57% | 46% | 42% |
| Properties | Color tone change | | ○ | ○ | ○ | ○ |
| | Weather resistance | | ○ | ○ | ○ | ○ |
| | Chemical resistance | | B | A | A | A |
| | Far-infrared radiation reflectance | | 93% | 93% | 93% | 93% |
| | Visible radiation transmittance | | 59% | 75% | 61% | 66% |

### Industrial Applicability

Because the multilayer laminated substrate of the present invention exhibits a good external appearance while having a high far-infrared radiation reflectance, use thereof in windows of a building or a mobile unit makes it possible to maintain a thermal environment while restraining the consumption of energy by blocking thermal energy flowing in or out, without impairing views through the windows.

### Explanation of Numerals

1: transparent resin substrate [A]
2: transparent primer layer [B]
3: metal oxide layer [C]
4: electroconductive metal layer [D]
5: high refractive index metal oxide layer [E]
6: protection layer [F]
7: surface reforming layer [G]

## Claims

1. A multilayer laminated substrate **characterized in that** at least a transparent resin substrate [A], a metal oxide layer [C], an electroconductive metal layer [D], a high refractive index metal oxide layer [E], and a protection layer [F] containing at least one of an inorganic oxide and an inorganic nitride are stacked in this order and the following (1) and (2) are satisfied:
(1) thickness of the protection layer [F] is 5 nm to 300 nm; and
(2) relative to a sum total of one or more metal elements, one or more semimetal elements, and one or more semiconductor elements contained in the protection layer [F], a content percentage by mass of carbon contained in the protection layer [F] is less than or equal to 50%.

2. The multilayer laminated substrate according to Claim 1, **characterized in that** the protection layer [F] contains a silicon and a carbon and at least a portion of the silicon is silicon oxide and/or silicon nitride, and the following a and b are satisfied:
a. relative to the sum total of the one or more metal elements, the one or more semimetal elements, and the one or more semiconductor elements contained in the protection layer [F], a content percentage by number of atoms of silicon is greater than or equal to 50% by number of atoms and less than or equal to 99% by number of atoms; and
b. relative to the sum total of the one or more metal elements, the one or more semimetal elements, and the one or more semiconductor elements contained in the protection layer [F], the content percentage by number of atoms of carbon is greater than or equal to 1% by number of atoms and less than or equal to 50% by number of atoms.

3. The multilayer laminated substrate according to Claim 2, **characterized in that** the protection layer [F] further contains an oxygen and a nitrogen, the oxygen forms an oxide with at least one species selected from the group consisting of the one or more metal elements, the one or more semimetal elements, and the one or more semiconductor elements contained in the protection layer [F], and the nitrogen forms a nitride with at least one species selected from the group consisting of the one or more metal elements, the one or more semimetal elements, and the one or more semiconductor elements contained in the protection layer [F], and the following c is satisfied:
c. a relative content percentage of nitrogen {(content percentage by number of atoms of nitrogen) / ((content percentage by number of atoms of oxygen) + (content percentage by number of atoms of nitrogen)) × 100} that is a content percentage by number of atoms of nitrogen relative to a sum of the content percentage by number of atoms of nitrogen and a content percentage by number of atoms of oxygen that are contained in the protection layer [F] is greater than or equal to 1% and less than or equal to 80%.

4. The multilayer laminated substrate according to any one of Claims 1 to 3, wherein the protection layer [F] is a protection layer in which one or more layers selected from the group consisting of a layer containing an inorganic oxide, a layer containing an inorganic nitride, and a layer containing an inorganic oxide and an inorganic nitride are stacked.

5. The multilayer laminated substrate according to any one of Claims 1 to 4, comprising a transparent primer layer [B] between the transparent resin substrate [A] and the metal oxide layer [C].

6. The multilayer laminated substrate according to Claim 5, wherein the metal oxide layer [C] satisfies the following (3), (4), and (5):
(3) the metal oxide layer [C] is in direct contact with the transparent primer layer [B];
(4) relative to a sum total of one or more metal elements, one or more semimetal elements, and one or more semiconductor elements contained in the metal oxide layer [C], a content percentage by mass of tin contained in the metal oxide layer [C] is greater than or equal to 50% and less than or equal to 90%; and
(5) relative to the sum total of the one or more metal elements, the one or more semimetal elements, and the one or more semiconductor elements contained in the metal oxide layer [C], a content percentage by mass of zinc contained in the metal oxide layer [C] is greater than or equal to 10% and less than or equal to 50%.

7. The multilayer laminated substrate according to any one of Claims 1 to 6, wherein the high refractive index metal oxide layer [E] satisfies the following (6), (7), and (8):
(6) the high refractive index metal oxide layer [E] is in direct contact with the protection layer [F];
(7) relative to a sum total of one or more metal elements, one or more semimetal elements, and one or more semiconductor elements contained in the high refractive index metal oxide layer [E], a content percentage by mass of tin contained in the high refractive index metal oxide layer [E] is greater than or equal to 50% and less than or equal to 90%; and
(8) relative to the sum total of the one or more metal elements, the one or more semimetal elements, and the one or more semiconductor elements contained in the high refractive index metal oxide layer [E], a content percentage by mass of zinc contained in the high refractive index metal oxide layer [E] is greater than or equal to 10% and less than or equal to 50%.
